# EUROPEAN PATENT SPECIFICATION

(11) **EP 2 620 389 B1**
(45) Date of publication and mention of the grant of the patent: **06.01.2016**
(21) Application number: 12152691.7
(22) Date of filing: 26.01.2012
(51) Int. Cl.: F03D 1/00

(54) **Holding system for blades of a wind turbine and method of transporting blades of a wind turbine therewith**
Haltesystem für Rotorblätter einer Windkraftanlage und Verfahren zum Transportieren von Rotorblättern einer Windkraftanlage damit
Système de maintien pour pales d'éolienne et méthode de transport de pales d'éolienne avec celui-ci

(43) Date of publication of application: 31.07.2013
(73) Proprietor: Siemens Aktiengesellschaft, 80333 München (DE)
(72) Inventor: Poulsen, Henning, 6900 Skjern (DK); Westergaard, Jan Emil, 7330 Brande (DK)

(56) References cited:
- EP-A2- 1 873 115
- EP-A2- 2 239 459
- WO-A1-2011/076238
- CN-A- 101 648 539
- GB-A- 827 210
- JP-A- 3 095 003
- JP-A- 2004 123 368
- JP-A- 2006 027 522
- JP-A- 2006 224 857
- JP-A- 2010 070 057
- US-A1- 2007 085 288
- US-A1- 2010 021 272

## Description

### Field of invention

The present invention relates to a holding system for holding blades for wind turbines. Furthermore, the present invention relates to a method for transporting blades for a wind turbine by a holding system.

### Art Background

Blades of modern wind turbines have large sizes such that the transportation of the blades from the manufacturing site to the site of operation is quite complicated. When several blades have to be transported, each blade is generally transported one by one due to the large blade size. In particular, the large blades are transported one by one on a trailer of a truck, on a train wagon or on a ship. In some cases, two blades are able to be stacked above each other during transportation by a truck or a train wagon. For further transportation by a boat, e.g. for offshore installations of wind turbines, the blades are transported from the truck to the ship in a stacked arrangement.

WO 2011/076238 A1, CN 101 648 539 A and EP 2 239 459 A2 disclose such transportation systems for wind turbine blades. Thereby more than one blade can be transported with the aid of specific holing system. JP 20067 224857 describes a similar storage system for fuel tanks.

Between a changeover of the transportation vehicles (from truck to ship for example) it may be time-consuming to carry the stacks by a crane. In particular, it may also be time-consuming to lift the blades out of one stack to another stack. In particular, the blades on the lower level of each stack have to be pulled out e.g. by a crane in a complicated way. There is also a safety risk when lifting the blades out of the stack from the lower levels of the stack. There is a risk that the blade hits the stacking frame.

From EP 1 873 115 A2 an aerial lifting device for a work platform is known. On the platform a storage rack for storing material is located.

Finally, US 2010/021272 A1 describes a a port system for storing and transporting standardized containers in a port facility.

### Summary of the Invention

It may be an objective of the present invention to provide a proper transport system for wind turbine blades.

This objective is solved by a holding system for transporting blades for wind turbines and by a method for transporting blades for a wind turbine according to the independent claims.

According to a first aspect of the present invention, a holding system for transporting blades for a wind turbine is presented. The holding system comprises a base frame and a support frame with a first holding section for holding a first blade of the turbine and a second holding section for holding a second blade of the wind turbine. The support frame is mounted to the base frame. Hence, the first holding section and the second holding section are coupled to the base frame. Furthermore, the holding system comprises a wheel arrangement which is mounted to the base frame such that the base frame and thus the holding system is movable along a ground.

The first holding section is located above the second holding section. Hence, the first blade may be supported above the second blade. In other words, if the first holding section is located above the second holding section, a column of holding sections and hence a vertically extending column of supported blades is provided. Additionally, the holding system comprises a first elevator device which is coupled to the support frame such that the second blade is movable between the first holding section and the second holding section.

According to a further aspect of the present invention, a method for transporting blades for a wind turbine by the above described holding system is described.

The holding system may be a frame system wherein along a generally horizontal base or ground plane the base frame extends. The base frame is e.g. a rectangular frame. At a central section or at a first end section and an opposed second end section the support frame, i.e. a first support frame and a second support frame, may be installed. The first support frame and the second support frame extend generally along a vertical direction. At the support frame the respective first holding section and the second holding are provided.

The first blade may be supported by the single support frame or may be supported by the first support frame and the second support frame. The section, where the first blade is supported by the single support frame or the respective first and second support frame is denoted in the following as the first holding section. The section, where the second blade is supported at the single support frame or at the first support frame and the second support frame is denoted in the following as the second holding section.

In further exemplary embodiments, a third support frame or a plurality of support frames may be coupled to the base frame in a generally vertical extending direction from the base frame.

At the respective holding section of the support frames, holding provisions for the respective blades are installed. The holding provision may be for example a support plate onto which the respective blades may be laid down. Furthermore, respective brackets may be installed at the respective holding sections, wherein the brackets have at least partially the complementary shape of the surface of the respective blades to be held. Hence, a proper and smoother supporting of the blades may be achieved by using respective brackets. The brackets may be for example fixed to the respective blade section and may be detachably hinged at the respective holding sections such that a quick removing of the blades to gether with the brackets from the respective holding sections is possible.

The wheel arrangement which is mounted to the base frame comprises wheel units with wheels such that the holding system may roll along the ground. The wheels may be adapted for rolling on conventional grounds. Furthermore, the wheels may be a train-like wheel which is adapted for rolling along rails which are running along the ground. The wheels may be made of steel or a rubber-like material.

The holding system may further comprise a plurality of further first holding sections for holding a plurality of respective further first blades and a plurality of further second holding sections for holding respective further second blades.

Hence, by the present invention, the holding system is adapted for stacking the blades in a large stack. Such a stack may comprise for example two, three or more rows of blades (i.e. stacked blades along a generally vertical direction) and two, three or more columns (i.e. stacked blades along a generally horizontal direction) such that a plurality of blades may be stacked adjacent to one another and above one another. In particular, the holding system comprises the wheel arrangement which is attached to the base frame such that the holding system may be directly transported from the blade factory to the site of installation by a plurality of transport vehicles, wherein the changing of the transport vehicle can be done in a quick manner. Because the holding system is rollable by the wheel arrangement onto the ground, the holding system may be for example rollable from or onto a truck or a ship in a fast manner. For example, a so called roll-on-roll-off ship (RORO ships) which has an accessible loading area from the ground may be applied, wherein the holding system may easily be rolled onto or off the ship. Hence, it is not longer possible to move (e.g. by a crane) each blade one after another from one kind of transport vehicle to another kind of transport vehicle. By the present invention the complete stack of wind turbine blades may be moved by the retaining system from one kind of transport vehicle to the other kind of transport vehicle. Hence, a fast and effective transportation of a plurality of wind turbine blades is achievable.

According to a further exemplary embodiment, the wheel arrangement comprises at least two wheel units which are spaced apart from each other. Each wheel unit may comprise a plurality of wheels in order to distribute the weight of the blades to the plurality of wheels. The wheel units may be distributed along the base frame such that a proper weight distribution and a stable support of the holding system onto the ground are achieved. In particular, one wheel unit may be installed at the first end of the base frame and a second wheel unit may be installed at the second end of the base frame which is located opposed to the first base frame.

According to a further exemplary embodiment, the wheel arrangement and the wheel unit respectively are detachably coupled to the base frame. Hence, the wheel arrangement may be dismounted during transportation of the holding system by a transport vehicle. During transportation, the holding system may for example stand onto pillars or support foots such that a stable support is provided.

According to a further exemplary embodiment, the wheel arrangement is movable along a direction having a vertical component, such that, in a first position, the wheel arrangement lifts the base frame and, in a second position, the base frame stands at the ground and the wheel arrangement is not in contact, i.e. in force transmitting contact, with the ground. In other words, the wheel arrangement may comprise wheels which may be moved away from the ground or in a direction to the ground. Hence, when moving the holding system between the transport vehicles, the wheel arrangement and the wheels respectively may be moved in the first position and during transportation onto the vehicle, the wheel arrangement and the wheels respectively may be moved into the second position. In the second position, the base frame may stand onto pillars and standing foot which may provide a more robust supporting onto the ground in comparison to the wheels.

In the following, the first holding section defines the holding section at a top of the column and the second holding section may define the holding section below (with respect to a vertical direction) the first holding section. In particular, a plurality of second holding sections may be located in one common column below the first holding section. The first holding section defines the top section of the retainer section which is located further most away from the ground with respect to the second holding section(s).

The first blade which is held by the first holding section may easily be carried to or away from the holding system by a crane which grabs the first blade from the top of the holding system and which moves in a further step the first blade along a vertical direction away from the holding system. Hence, if the first holding section is free from the first blade, the elevator device may move the second blade from the lower located second holding section up to the first (top) section. Hence, the second blade is a first blade which is held by the first holding section. In a next step, the crane may again grab the second blade which is fixed by the first holding section and may carry the second blade away from the holding system in a simple manner. Because the second blade is held within the first top holding section, the second blade must not be elevated carefully by the crane within the holding system but may be elevated away from the holding system from the top first holding section. Hence, the risk that the second blade hits the holding system and thus the risk of damaging the blades when being moved to or away the holding system are reduced.

By the elevator device the first and second blades may be elevated one by one up to the top level (the first holding section) of the holding system. In this way all the blades may be carried away from the top level of the holding system by e.g. a crane or similar lifting means, if the blades are going to be installed at the wind turbine or if the blades are moved to the holding system. This minimizes safety risks during handling of the blades.

If loading the holding system, a second blade is firstly elevated from the top level to the lowest accessible level. Subsequently, a further second blade is set to the first holding section (top level of the holding system) and lowered to the second lowest level (a further second holding section) etc. until the blade retainer is fully loaded with blades, wherein at the top level (the first holding section), the first blade is stored. Summarizing, by the first elevator device the blades may be elevated downwards or upwards within the holding system during loading or unloading the holding system.

The elevator device may comprise for example chains and/or wires which are coupled to the blades, i.e. which are coupled to the supporting plates or the brackets. Driving motors (electrically, hydraulic and/or pneumatic driven motors) and gears are used for driving the chain and/or the wire. For example, a chain may be installed at a support frame and may run along a vertical direction along the support frame. A supporting plate or a bracket for holding the respective blade may be coupled to the chain. When moving the chain along a vertical direction, also the coupled brackets and thus the respective blades move along the vertical direction. The brackets or the supporting plates may be hinged detachably to the chain. In other words, when moving the chain along the vertical direction, the blade may be moved to a desired first and/or second holding section of the holding system and in particular of the respective central, first and/or second support frame.

According to a further exemplary embodiment, the holding system comprises a further first holding section for holding a further first blade of the wind turbine and a further second holding section for holding a further second blade of the wind turbine. The further first holding section is located above the further second holding section. The first holding section and the second holding section are located adjacent along a generally horizontal direction with respect to the further first holding section and the further second holding section.

The first holding section and the further first holding section describe a row of the vertically top level holding section of the holding system and in particular of a respective central, first and/or second support frame. The second holding section and the further second holding section describe respective holding sections which describe a further row which are located below the respective first holding section and the further first holding section. Below the first holding section and the further first holding section a plurality of (rows of) second holding sections and further second holding sections may be installed. In other words, the first holding section and the second holding section(s) define a first column of holding sections and the further first holding section and the further second holding section(s) define a second column of holding sections. The first holding section and the further first holding section are located adjacent to each other along a generally horizontal direction. Hence, the first holding section and the further first holding section may define a first (generally horizontally extending) row. The second holding section and the further second holding section may be located adjacent to each other along the horizontal direction and thus defining a second row. In particular, a plurality of columns of first and second holding sections and a plurality of second rows of second holding sections may be installed at the holding system, whereby the plurality of second rows are located below the top level located first holding section and further first holding sections.

Summarizing, the holding system may be formed, which is adapted to carry a stack of first and second blades, which stack may comprise for example more than two rows and more than two columns of holding sections. For example, a stack of blades which may be held by the holding system which may comprise two columns and five rows of respective holding sections and of respective blades to be held.

According to a further exemplary embodiment, the first elevator device is further coupled to the further support frame such that the second blade and the further second blade are movable between the first holding section and the second holding section at the same time. Hence, by the above described exemplary embodiment, a complete row of blades may be moved from a lower second holding section up to the top level first holding section.

In a further exemplary embodiment, the holding system further comprises a second elevator device which is coupled to the support frame such that the further second blade is movable between the further first holding section and the further second holding section. The second elevator device may comprise similar features as the first elevator device as described above.

By using a first elevator device and a second elevator device, the second blade and the further second blade may be elevated to the first holding section and the further first holding section individually and time shifted. Hence, the second blade and the further second blade may be moved independent from each other between the first holding section and the second holding section.

According to a further exemplary embodiment of the holding system, the holding system further comprises a gangway which is mounted to the first holding section such that the first holding section is accessible by a person. Hence, e.g. a crane hook may be coupled manually by the worker to the respective brackets. Hence, a proper coupling of the crane to the respective blade to be carried is achieved.

The above described holding system may be transported between several transportation vehicles by a transport system. The transport system comprises a further support frame by which the holding system is supportable. A third elevator device is coupled to the further support frame such that the further support frame and hence the holding system that is supported by the further support frame are movable along a direction having a vertical component.

The further support frame of the transport system may be a set of beams or rails onto which the retainer may be moved (rolled) along in particular by the wheel arrangement of the holding system. The transport system may comprise a framework with guiding elements (guiding rails) along which the support frame is movable along a generally vertical direction by the third elevator device.

The third elevator device may comprise the same or similar technical features as the first and the second elevator devices. For example, the support frame may be coupled to a chain which is movably mounted to the framework of the further support frame of the transport system and which chain may be driven by a respective electric, hydraulic or pneumatic motor.

The transport system may be installed for example on a respective transport vehicle, such as a ship or a loading platform of a truck. For example, if the loading area of the ship and the loading area of the truck have different heights, the transport system installed at the truck may elevate or lower the further support frame onto which the holding system is supported until a common level of the further support frame of a further transport systems which is located on the ship is achieved. Next, if the further support frame of the one transport system has the same height level as the further support frame of another transport system, the holding system may easily be moved (rolled) from the one further support frame to the other further support frame by its wheel arrangement.

Hence, by the transport system an easy method for moving the stack of blades supported by the above described holding system from one transport system installed at a first transport vehicle to another transport system installed at a further transport vehicle is provided.

According to a further exemplary embodiment of the transport system, the transport system comprises a further base frame and a further wheel arrangement which is coupled to the further base frame. The further wheel arrangement comprises at least two further wheel units which are spaced apart from each other. Hence, also the transport system may be movable by the further wheel arrangement along a ground and a respective loading platform of a transport vehicle respectively. Hence, the transport system is more flexible.

According to a further exemplary embodiment of the transport system, the wheel arrangement is detachably coupled to the further base frame. According to a further exemplary embodiment, the further wheel arrangement is movable along a direction having a vertical component such that in a first position, the further wheel arrangement lifts the further base frame, and, in a second position, the further base frame stands at the ground.

Furthermore, if the transport system is movable with the further wheel arrangement, the transport system may be positioned along a loading platform of the respective transport vehicle to a desired loading section which is e.g. easily reachable by a crane. Hence, it is not necessary to provide a movable crane or a plurality of cranes in order to remove the respective blades or the respective holding system.

The first elevator, the second elevator device and/or the third elevator device(s) may be remote-controlled by a controller and powered for example by a fuel driven generator or a battery or other power means.

Summarizing, by the present invention a holding system is presented which provide a proper method for transportation of wind turbine blades. The blades are stacked into the respective supporting sections of the holding system in two or more rows and one or more columns. Furthermore, the holding system is movable by the respective wheel arrangement. Furthermore, in a further exemplary embodiment the holding system comprises elevator devices such that the respective second blades are placed in a top level row and may be elevated down to a lower level row by the elevator devices. Each blade may easily be removed from the top level row (the first and the further first holding section) by elevating the respective second blades from the lower levels (second and further second holding sections) to the top level row by the elevator devices.

Furthermore, the holding system may be carried by a further support frame of the transport system, which further support frame may be elevated and lowered by a third elevator device.

According to a further aspect of the present invention, a method for transportation of blades using the above described holding system is presented.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless otherwise notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 shows a schematical view of a holding system according to an exemplary embodiment of the present invention;
Fig. 2 shows an enlarged view of the holding system as shown in Fig. 1;
Fig. 3 to Fig. 5 show schematical views of a transport system and a holding system according to an exemplary embodiment of the present invention.

### Detailed Description

The illustrations in the drawings are schematical. It is noted that in different figures, similar or identical elements are provided with the same reference signs.

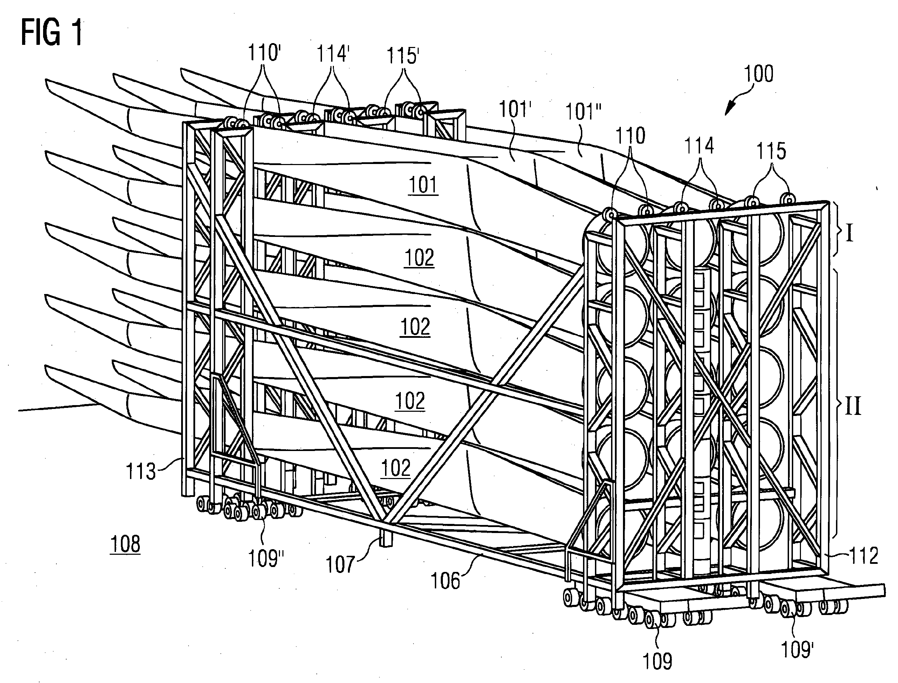

Fig. 1 shows a holding system 100 for transporting blades 101, 102. The holding system 100 comprises a base frame 106, a first support frame 112 and a second support frame 113. The first support frame 112 and the second support frame 113 are mounted to the base frame 106. Each of the first support frame 112 and the second support frame 113 comprise a first holding section I for holding first blades 101, 101', 101" of the wind turbine and a second holding section II for holding second blades 102, 102', 102" of the wind turbine. Furthermore, the holding system 100 comprises a wheel arrangement, which comprises a plurality of wheel units 109, 109', 109" . The wheel arrangement is mounted to the base frame 106 such that the base frame 106 is movable along a ground 108.

The exemplary embodiments of the present invention as shown in Fig. 1 illustrates the holding system 100 which comprises a base frame 106 which has a rectangular shape, wherein at respective opposing end sections the first support frame 112 and the second support frame 113 is mounted. Each support frame 112, 113 comprises a respective first holding section at which a respective blade 101, 101', 101" may be fixed. Below the first holding section I, one or a plurality of second holding sections II are located at each support frame 112, 113, wherein opposed second holding sections II of the first and second support frame 112, 113 holds a respective second blade 102.

The first holding section I of the respective support frames 112, 113 describe the respective holding section at a top level of each support frame 112, 113, where the first blade 101, 101' 101" are held. The blades 101, 102 which are positioned at the first holding section I may be attached or detached to the holding system 100 by lifting or lowering the respective blades 101, 102 by a crane, for example.

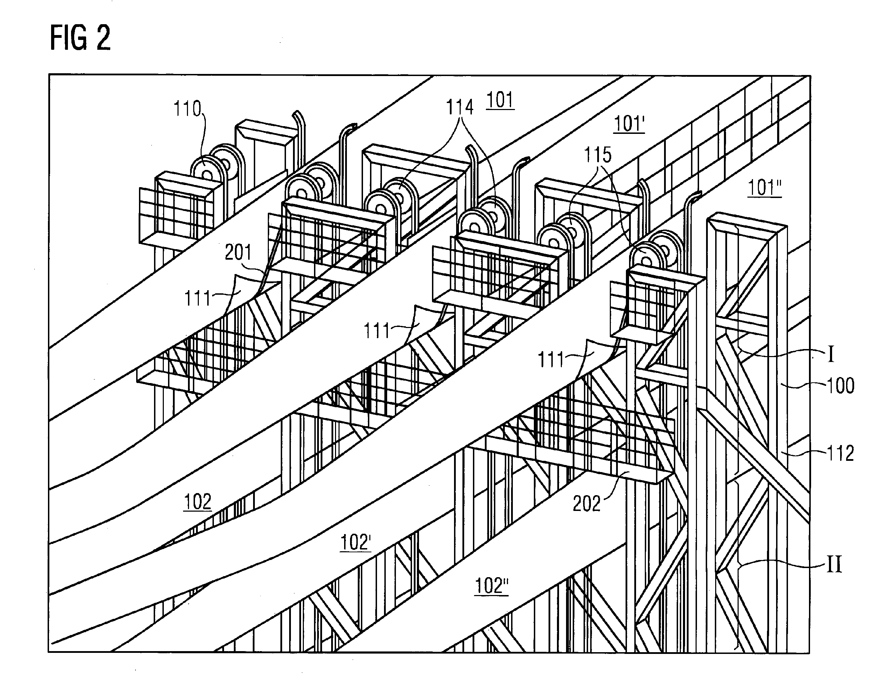

Each holding section I, II comprises a respective holding device for holding a respective blade 101, 102. The holding device of a respective holding section I, II may be for example a supporting plate or a bracket 111 (see Fig. 2).

As shown in Fig. 1, the holding system 100 is adapted for holding a stack of blades 101, 102, wherein the stack comprises in particular three columns of blades 101, 102 and five rows of blades 101, 102. In other exemplary embodiments of the present invention, more or less rows or columns or blades 101, 102 may be attached to a respective holding system 100.

As shown in Fig. 1, the holding system 100 comprises the base frame 106 to which at each corner a respective wheel unit 109, 109', 109" is attached. Hence, the holding system 100 is movable along the ground 108. Furthermore, each retainer unit 109, 109', 109" comprises respective wheels which may be movable into a first position and into a second position. In the first position, the wheel arrangements 109, 109', 109" lift the base frame 106 from the ground 108, wherein in a second position, the wheel units 109, 109', 109" do not support the base frame 106 and the base frame 106 stands with a pillar or a foot 107 on the ground 108.

The wheel units 109, 109', 109" may be placed below the base frame 106, e.g. by a fork lift or a similar vehicle before the set of wheel units 109, 109', 109" are activated. The wheel units 109, 109', 109" attached to the holding system 100 may also be used for the transport system 300, 310.

As shown in Fig. 1, a respective bracket 111 carries a root end or a tip end of the respective blades 101, 102. The brackets 111 may be attached to a chain, a wire or a belt 201 (as can be seen in Fig. 2) of the respective elevator device 110, 114, 115. The chain, the wire or the belt 201 may function as an endless loop system that runs from the bottom level of the respective support frame 112, 113 to the top level of the respective support frame 112, 113. Hence, if the respective bracket 111 moves upwards or downwards, the respective ends of the blades 101, 102 move to a desired location with respect to the respective support frame 112, 113. The respective blades 101, 102 may be manually or automatically locked or connected to a respective bracket 111.

Furthermore, provisions for a first elevator device 110, 110', 114, 115 are shown in Fig. 1. The first elevator device 110 may be attached as shown in Fig. 1 to the first support frame 112 and a further first elevator device 110' to the second support frame 113. The respective first elevator device 110, 110' may comprise e.g. a pulley on the top of the respective first and second support frame 112, 113. The pulley may be driven by a respective activator or motor. Around the pulley a rope loop or a chain loop may run. By the motor, the chain moves as well in particular along a vertical direction. At respective first and second holding sections I, II the brackets 111 are (detachably) attached to the chain. If the chain moves in the direction to the pulley 110, the bracket 111 and the respective blades 101, 102 are lifted as well. Hence, by the elevator device 110, a respective blade 101, 102 may be lowered or lifted between respective holding sections I, II. Hence, the blade 101, 102 may be taken from the holding system 100 from the top level position (the first holding section I) or may be attached to the holding system 101 at the top level section by a crane. It is not necessary to elevate the lowest located second blade 102 by a crane along the vertical direction. The lowest located second blade 102 may be for instance elevated by the first elevator device 110 to the first holding section I, wherein the risk of damage of the blade 102 is reduced.

Furthermore, the first elevator device 110 may lift or lower a complete row of blades between the first and the second holding section. Alternatively, to each column of the holding sections I, II a respective elevator device 110, 114, 115 may be coupled, such the blades 101, 102 are movable along a first column by the first elevator device 110, the blades 101', 102' are movable along a second column by the second elevator device 114 and the blades 101", 102" are movable along a second column by the further second elevator device 115.

Fig. 2 shows a more detailed view of the holding system 100 as shown in Fig. 1. In Fig. 2, the top level first holding section I is shown which comprises three columns of first blades 101, 101', 101" . Below the first holding section I the respective second holding sections II are located wherein the second holding section II holds a row of second blades 102, 102', 102".

Furthermore, in Fig. 2 the first elevator device 110, the second elevator device 114 and the further second elevator device 115 are shown in more detail. Each elevator device 110, 114, 115 may comprise a pulley around which a closed looped belt is running. Between two pulleys of a respective elevator device 110, 114, 115 the belt is running, wherein a bracket 111 is held by the section of the belt which runs between the pulleys. By moving the belt with the respective pulleys, the belt length between the pulleys may be increased or decreased such that a height position of the respective blade 101, 101', 101", 102, 102', 102" is adjustable. If the desired position of the bracket 111 is adjusted by the respective elevator device 110, 114, 115, the bracket 111 may be fixed to the respective first support frame 112, 113 and the rope may be detached from the bracket 111.

As shown in Fig. 2, at each column a respective elevator device 110, 114, 115 is provided, such that the blades 101, 101', 101" , 102, 102', 102" of each column may be lifted or lowered independently with respect to an adjacent column. It may be also possible to provide one common elevator device 110, 114, 115 with which a complete row of blades 101', 101" or 102, 102', 102" may be lowered and lifted at the same time.

Furthermore, as shown in Fig. 2, a gangway 202 is shown. The gangway 202 may be located along the first holding section I, such that the worker may move along the first holding section I. Hence, the grabbing elements of the crane, such as a hook, may be manually attached to the respective bracket 111 or the respective blade 101', 101", 102, 102', 102" to be lifted or lowered.

Additionally to the gangway 202 a plurality of gangways may be provided at the first support frame 112 and/or the second support frame 113 such that the blade 101, 102 at the respective first holding sections I and second holding sections II are accessible by a worker. Hence, the blade handling may be easier. For example, the worker may assist the placing and attaching for example a crane hook. The gangways 202 may be reachable by a ladder, for example.

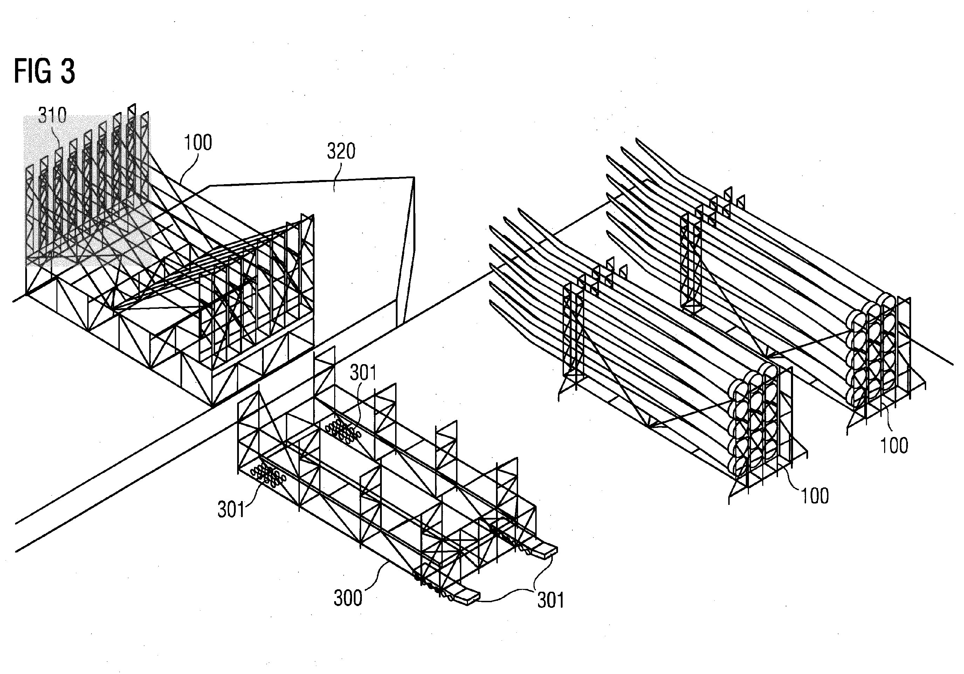

Fig. 3 shows a transport system 300 which is adapted for transporting the holding system 100 in particular as shown in Fig. 1 and Fig. 2. As shown in Fig. 3, a holding system 100 may be supported by a transport system 300. The transport system 300 comprises a further wheel arrangement 301 such that the transport system 300 may be driven from one transport vehicle to another transport vehicle, such as the ship 320 as shown in Fig. 3. The transport system 300 may lift or lower the supported holding system 100 from a first level to a second level, wherein each level corresponds to a platform of the respective transport vehicle or to a respective further transport system 310. Hence, an easy and fast movement between the transport vehicles of the blade stacks held by the holding system 100 is achieved.

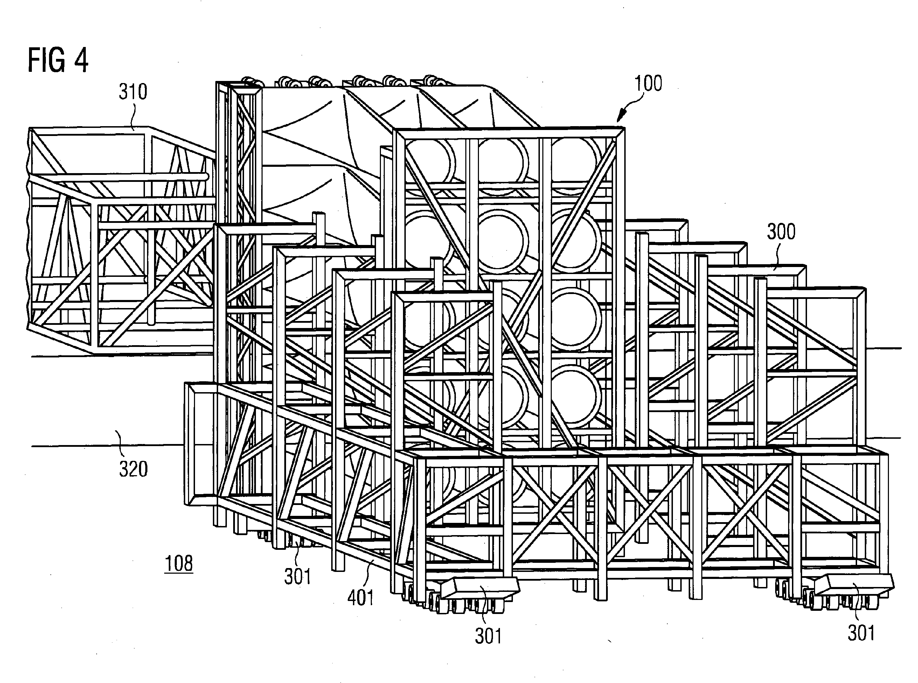

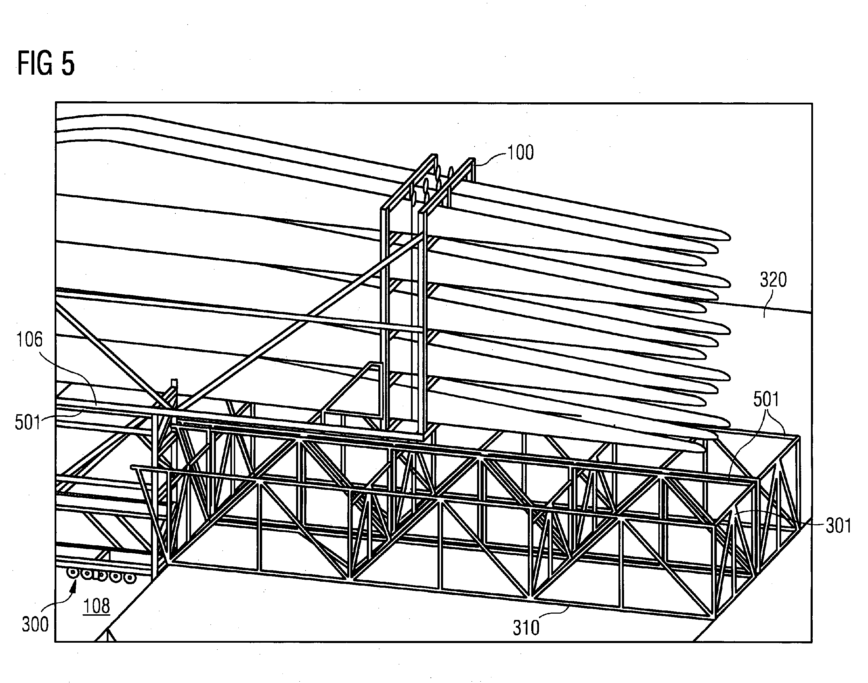

Fig. 4 and Fig. 5 show a respective transport system 300, 310. A holding system 100 is supposed to be moved between the transport system 300 und the further transport system 310.

As shown in Fig. 4, the further transport system 310 is located onto a transport ship 320 and the transport system 300 is located on the ground 100. The transport system 300 may be moved by the further wheel arrangement 301 to a desired position close to the ship 320. The further elevator device lifts the holding system 100 until a desired height of the holding system 100 is achieved. In particular, at the desired height, a further support frame 501 of the transport system 300 has the same distance to the ground 108 (common reference plane) as the further support frame 501' of the further transport system 310.

As shown in Fig. 5, the holding system 100 may be moved by its wheel arrangement along the respective further support frame 501, 501' until the holding system 100 is fully supported by either the transport system 300 or the further transport system 310. Hence, cranes or other equipment for carrying the holding system 100 from one transport system 300 to a further transport system 310 are unnecessary. Moreover, the complete stack of blades 101, 102 is movable to or away from a transport vehicle in a fast and save manner.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Holding system (100) for holding blades for a wind turbine, the holding system comprises
a base frame (106),
a support frame (112; 113) having a first holding section (I) for holding a first blade (101) of the wind turbine and a second holding section (II) for holding a second blade (102) of the wind turbine,
wherein the support frame (112; 113) is mounted to the base frame (106),
a wheel arrangement which is mounted to the base frame (106) such that the base frame (106) is movable on a ground (108), and
the first holding section (I) is located above the second holding section (II),
**characterized in that**
a first elevator device (110) which is coupled to the support frame (112; 113) such that the second blade (102) is movable between the first holding section (I) and the second holding section (II).

2. Holding system (100) according to claim 1,
wherein the wheel arrangement comprises at last two wheel units (109) which are spaced apart from each other.

3. Holding system (100) according to claim 1 or 2,
wherein the wheel arrangement is detachably coupled to the base frame (106).

4. Holding system (100) according to one of the claims 1 to 3,
wherein the wheel arrangement is movable along a direction to and away from the base frame (106) such that, in a first position, the wheel arrangement caries the base frame (106) and, in a second position, the base frame (106) is located at the ground (108).

5. Holding system (100) according to claim 4, wherein the support frame (112; 113) further comprises a further first holding section (I') for holding a further first blade (101) of the wind turbine and a further second holding section (II') for holding a further second blade (102') of the wind turbine,
wherein the further first holding section (I') is located above the further second holding section (II'), and
wherein the first holding section (I) and the second holding section (II) are located adjacent along a generally horizontal direction with respect to the further first holding section (I') and the further second holding section (II').

6. Holding system (100) according to claim 5,
wherein the first elevator device (110) is further coupled to the support frame (112; 113) such that the second blade (102) and the further second blade (102') are movable between the respective first holding section (I) and the further first holding section (I') and the respective second holding section (II) and the further second holding section (II').

7. Holding system (100) according to claim 5 or 6, further comprising
a second elevator device (203) which is coupled to the support frame (112; 113) such that the further second blade (102') is movable between the further first holding section (I') and the further second holding section (II').

8. Holding system (100) according to one of the claims 1 to 7, further comprising
a gangway (202) which is mounted to the support frame (112; 113) such that the first holding section (I) is accessible by a person.

9. Method for transporting blades for a wind turbine by using a holding system (100) according to one of the claims 1 to 8.

## Patentansprüche

1. Haltesystem (100) zum Halten von Rotorblättern für eine Windkraftanlage, wobei das Haltesystem umfasst:
einen Grundrahmen (106),
einen Stützrahmen (112; 113), der einen ersten Halteabschnitt (I) zum Halten eines ersten Rotorblattes (101) der Windkraftanlage und einen zweiten Halteabschnitt (II) zum Halten eines zweiten Rotorblattes (102) der Windkraftanlage aufweist,
wobei der Stützrahmen (112; 113) an dem Grundrahmen (106) angebracht ist,
eine Radanordnung, welche an dem Grundrahmen (106) angebracht ist, so dass der Grundrahmen (106) auf einem Boden (108) bewegbar ist, und
wobei der erste Halteabschnitt (I) über dem zweiten Halteabschnitt (II) angeordnet ist,
**gekennzeichnet durch**
eine erste Hebevorrichtung (110), welche mit dem Stützrahmen (112; 113) derart gekoppelt ist, dass das zweite Rotorblatt (102) zwischen dem ersten Halteabschnitt (I) und dem zweiten Halteabschnitt (II) bewegbar ist.

2. Haltesystem (100) nach Anspruch 1,
wobei die Radanordnung wenigstens zwei Radeinheiten (109) umfasst, welche voneinander beabstandet sind.

3. Haltesystem (100) nach Anspruch 1 oder 2,
wobei die Radanordnung lösbar mit dem Grundrahmen (106) gekoppelt ist.

4. Haltesystem (100) nach einem der Ansprüche 1 bis 3,
wobei die Radanordnung in einer Richtung zu dem Grundrahmen (106) hin und von diesem weg bewegbar ist, so dass in einer ersten Position die Radanordnung den Grundrahmen (106) trägt und in einer zweiten Position der Grundrahmen (106) am Boden (108) angeordnet ist.

5. Haltesystem (100) nach Anspruch 4, wobei der Stützrahmen (112; 113) ferner einen weiteren ersten Halteabschnitt (I') zum Halten eines weiteren ersten Rotorblattes (101) der Windkraftanlage und einen weiteren zweiten Halteabschnitt (II') zum Halten eines weiteren zweiten Rotorblattes (102') der Windkraftanlage umfasst,
wobei der weitere erste Halteabschnitt (I') über dem weiteren zweiten Halteabschnitt (II') angeordnet ist, und
wobei der erste Halteabschnitt (I) und der zweite Halteabschnitt (II) entlang einer im Wesentlichen horizontalen Richtung bezüglich des weiteren ersten Halteabschnitts (I') und des weiteren zweiten Halteabschnitts (II') benachbart angeordnet sind.

6. Haltesystem (100) nach Anspruch 5,
wobei die erste Hebevorrichtung (110) ferner mit dem Stützrahmen (112; 113) derart gekoppelt ist, dass das zweite Rotorblatt (102) und das weitere zweite Rotorblatt (102') zwischen dem ersten Halteabschnitt (I) bzw. dem weiteren ersten Halteabschnitt (I') und dem zweiten Halteabschnitt (II) bzw. dem weiteren zweiten Halteabschnitt (II') bewegbar sind.

7. Haltesystem (100) nach Anspruch 5 oder 6, welches ferner umfasst:
eine zweite Hebevorrichtung (203), welche mit dem Stützrahmen (112; 113) derart gekoppelt ist, dass das weitere zweite Rotorblatt (102') zwischen dem weiteren ersten Halteabschnitt (I') und dem weiteren zweiten Halteabschnitt (II') bewegbar ist.

8. Haltesystem (100) nach einem der Ansprüche 1 bis 7, welches ferner umfasst:
einen Laufsteg (202), welcher an dem Stützrahmen (112; 113) angebracht ist, so dass der erste Halteabschnitt (I) für eine Person zugänglich ist.

9. Verfahren zum Transportieren von Rotorblättern für eine Windkraftanlage unter Verwendung eines Haltesystems (100) nach einem der Ansprüche 1 bis 8.

## Revendications

1. Système de maintien (100) permettant de maintenir des pales d'éolienne, le système de maintien comprenant
une charpente de base (106),
une charpente de support (112 ; 113) présentant une première section de maintien (I) permettant de maintenir une première pale (101) d'éolienne et une seconde section de maintien (II) permettant de maintenir une seconde pale (102) d'éolienne,
dans lequel la charpente de support (112 ; 113) est montée sur la charpente de base (106),
un agencement de roues qui est monté sur la charpente de base (106) de telle manière que la charpente de base (106) est mobile sur un sol (108), et
la première section de maintien (I) est située au-dessus de la seconde section de maintien (II),
**caractérisé en ce que**
un premier dispositif élévateur (110) est couplé à la charpente de support (112 ; 113) de telle manière que la seconde pale (102) est mobile entre la première section de maintien (I) et la seconde section de maintien (II).

2. Système de maintien (100) selon la revendication 1,
dans lequel l'agencement de roues comprend au moins deux unités à roues (109) qui sont espacées l'une par rapport à l'autre.

3. Système de maintien (100) selon la revendication 1 ou 2,
dans lequel l'agencement de roues est couplé détachable à la charpente de base (106).

4. Système de maintien (100) selon l'une quelconque des revendications 1 à 3,
dans lequel l'agencement de roues est mobile le long d'une direction allant vers, et s'éloignant de la charpente de base (106) de telle manière que, dans une première position, l'agencement de roues porte la charpente de base (106) et, dans une seconde position, la charpente de base (106) est située au niveau du sol (108).

5. Système de maintien (100) selon la revendication 4, dans lequel la charpente de support (112 ; 113) comprend en outre une autre première section de maintien (I') permettant de maintenir une autre première pale (101) d'éolienne et une autre seconde section de maintien (II') permettant de maintenir une autre seconde pale (102') d'éolienne,
dans lequel l'autre première section de maintien (I') est située au-dessus de l'autre seconde section de maintien (II'), et
dans lequel la première section de maintien (I) et la seconde section de maintien (II) sont situées adjacentes le long d'une direction essentiellement horizontale par rapport à l'autre première section de maintien (I') et à l'autre seconde section de maintien (II').

6. Système de maintien (100) selon la revendication 5,
dans lequel le premier dispositif élévateur (110) est en outre couplé à la charpente de support (112 ; 113) de telle manière que la seconde pale (102) et l'autre seconde pale (102') sont mobiles entre la première section de maintien (I) et l'autre première section de maintien (I') respectives et la seconde section de maintien (II) et l'autre seconde section de maintien (II') respectives.

7. Système de maintien (100) selon la revendication 5 ou 6, comprenant en outre
un second dispositif élévateur (203) qui est couplé à la charpente de support (112 ; 113) de telle manière que l'autre seconde pale (102') est mobile entre l'autre première section de maintien (I') et l'autre seconde section de maintien (II').

8. Système de maintien (100) selon l'une quelconque des revendications 1 à 7, comprenant en outre
une passerelle de service (202) qui est montée sur la charpente de support (112 ; 113) de telle manière que la première section de maintien (I) est accessible par une personne.

9. Procédé de transport de pales d'éolienne utilisant un système de maintien (100) selon l'une quelconque des revendications 1 à 8.
